(19) Europäisches Patentamt
European Patent Office
Office européen des brevets

(11) **EP 2 086 055 A1**

(12) **EUROPEAN PATENT APPLICATION**

(43) Date of publication:
**05.08.2009 Bulletin 2009/32**

(51) Int Cl.:
*H01Q 21/24* (2006.01)    *G01S 1/00* (2006.01)

(21) Application number: **09151469.5**

(22) Date of filing: **27.01.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **04.02.2008 US 25197**

(71) Applicant: **Honeywell International Inc.
Morristown, NJ 07962 (US)**

(72) Inventors:
• **Bedell, F. Cole**
  **Honeywell International Inc.
  Morristown, NJ 07962-2245 (US)**
• **Waid, James D.**
  **Honeywell International Inc.
  Morristown, NJ 07962-2245 (US)**

(74) Representative: **Buckley, Guy Julian
Patent Outsourcing Limited
1 King Street
Bakewell
Derbyshire DE45 1DZ (GB)**

(54) **Real-time multipath detection and mitigation**

(57)    A multipath error detection system (100) includes a first antenna (105) configured to receive a right hand circular polarized signal from a satellite (115) and a second antenna (110) configured to receive a left hand circular polarized signal from the satellite (115). At least one processor (130) is in signal communication with the first and second antennas (105, 110), and is programmed to determine, from the right hand circular polarized signal and left hand circular polarized signal, respective first and second values of a first parameter and respective third and fourth values of a second parameter. The at least one processor (130) is further configured to determine, based on the values, the presence of a multipath error associated with at least one of the polarized signals.

FIG.1

EP 2 086 055 A1

**Description**

## BACKGROUND OF THE INVENTION

A global positioning system (GPS) employs a GPS receiver responsive to the signals from a number of GPS satellites to determine the position of the receiver which may be borne by a person, airplane, missile, boat, car or other object. GPS position determination depends on the accurate pseudorange measurements between the user and the GPS satellites. However, multipath propagation is a major cause of errors in such measurements. Multipath propagation occurs when the signal from a satellite arrives at receiving antennas not just along a single direct path but also through one or more reflective paths so that multiple signals are received by the antennas thereby introducing errors in the pseudorange measurements which contribute to positioning errors.

## SUMMARY OF THE INVENTION

In an embodiment, a multipath error detection system includes a first antenna configured to receive a right hand circular polarized / direct signal from a satellite and a second antenna configured to receive a left hand circular polarized / reflected signal from the satellite. At least one processor is in signal communication with the first and second antennas, and is programmed to determine, from the right hand circular polarized signal and left hand circular polarized signal, respective first and second values of a first parameter and respective third and fourth values of a second parameter. The at least one processor is further configured to determine, based on the values, the presence of a multipath error associated with at least one of the polarized signals.

## BRIEF DESCRIPTIONS OF THE DRAWINGS

Preferred and alternative embodiments of the present invention are described in detail below with reference to the following drawings:
FIGURE 1 is a functional block diagram illustrating a system according to an embodiment of the present invention;
FIGURE 2 is a state diagram illustrating principles according to an embodiment of the present invention; and
FIGURE 3 is a flow diagram illustrating a method according to an embodiment of the present invention.

## DETAILED DESCRIPTION OF THE PREFERRED EMBODIMENT

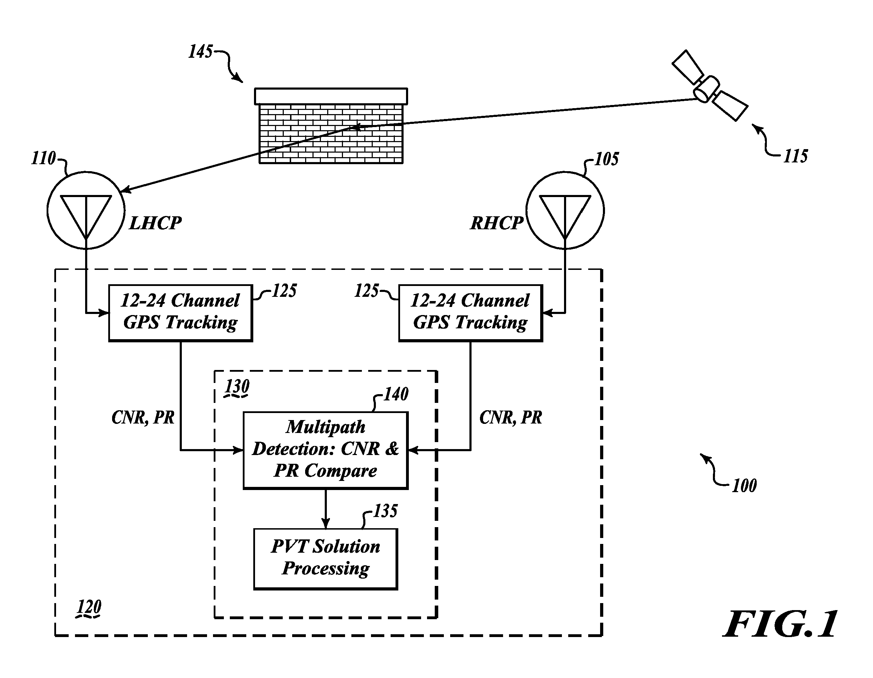

As will be more fully described hereinafter, a system according to an embodiment, and as best illustrated with reference to FIG. 1, provides real-time detection of GPS-code multipath through the implementation of a dual-string receiver architecture. Each side of the receiver can make measurements through independent paths to respective antennas.
FIG. 1 illustrates a multipath-error-detection system 100 employing principles of an embodiment of the invention. A first antenna 105 is configured to receive Right Hand Circular Polarized (RHCP) signals and a second antenna 110 is configured to receive Left Hand Circular Polarized (LHCP) signals from a satellite transmitter 115. In an embodiment, the direct GPS signal is a RHCP signal and the indirect or multipath signal is a LHCP signal. The antennas 105, 110 provide the received signals to at least one receiver unit 120 that may include a processing unit 130. Alternatively, the processor 130 may be external to, but in communication with, the receiver unit 120. The dual-path configuration produces unique sets of measurements associated with the visible satellites (SVs).
The RHCP "side" of the receiver produces the measurements used in, for example, the Position Velocity and Time (PVT) solution. Each series of the tracking channels 125 of the receiver 120 track and make measurements on the same satellites. As more fully discussed hereinafter, the measurements are compared to detect the presence of multipath. Once multipath is detected, the processor 130, configured to perform solution processing 135, can elect to discontinue using the measurements for that SV in the solution. This results in a more accurate and reliable position fix. While the illustrated solution processing 135 implements a PVT solution, it is to be understood that other suitable solutions may likewise be implemented in lieu of the PVT solution. A correlator (not shown) on the RHCP side may be adjusted, postdetection, in an attempt to reacquire the direct signal.
Signal power levels and pseudorange measurements are provided to multipath detection logic 140 associated with the processor 130. When power levels from the LHCP channel approach the levels observed on the RHCP side, there is a high probability that multipath is present. The multipath signal is a signal reflected by an object 145 and most often "reverses" polarity, has a reduced power level and arrives later than the direct signal. As such, power levels that are similar indicate multipath. When the power levels of the reflected signal approach the levels of the direct, then the code correlators produce measurements that are biased by the late-arriving multipath signal. Additionally, pseudorange measurements that are different further indicate multipath. Comparison of the measurements and the power level from both antennas, each configured to respectively receive the direct (RHCP) and the indirect (LHCP), enables multipath detection.

The detection statistics are a direct comparison (difference) between the measured pseudoranges and the carrier-to-noise ratios for the same satellite on the RHCP channel and the LHCP channel. In an embodiment, these differences provide an approach for determining the presence of multipath. Consider the following equations:

$$\Delta PR_i = PR_{i\_RHCP} - PR_{i\_LHCP}$$

Where:

$PR_{i\_RHCP}$ = Pseudorange measurement for satellite i on the RHCP channel
$PR_{i\_LHCP}$ = Pseudorange measurement for satellite i on the LHCP channel
$\Delta PR_i$ = Pseudorange test statistic

For the pseudorange and,
**[0015]**

$$\Delta CN0_i = CN0_{i\_RHCP} - CN0_{i\_LHCP}$$

Where:

$CN0_{i\_RHCP}$ = Carrier to noise measurement for satellite i on the RHCP channel
$CN0_{i\_LHCP}$ = Carrier to noise measurement for satellite i on the LHCP channel
$\Delta CN0_i$ = Carrier to noise test statistic

When multipath is not present, the pseudorange measurements on both channels will be the same or similar. The difference (test statistic) will be very small, containing only the differences in the channel tracking errors and antenna cable lengths. Normal receiver performance should result in a difference on the order of centimeters. For purposes of an embodiment of the invention, the threshold $T_{(\Delta PRi)}$ is set to 15 cm.

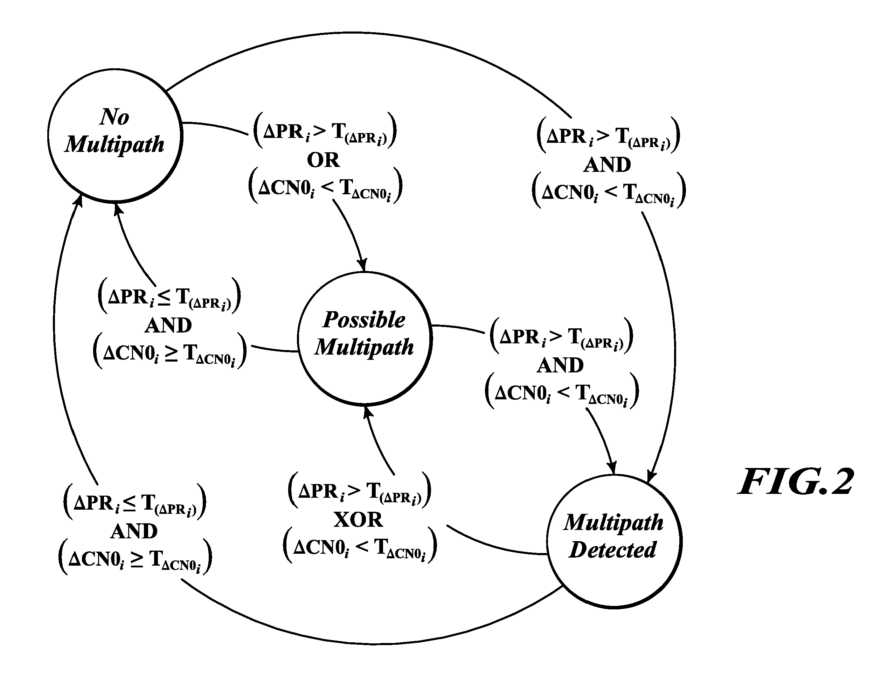

The measured carrier-to-noise ratios are dependent on multiple factors. The antenna gain difference for the RHCP and LHCP sides may be a significant factor. In an embodiment, a safe assumption is that the polarity of the antenna reduces the gain by approximately 3 dB (i.e., a true RHCP signal arriving at the LHCP antenna will be attenuated by 3 dB). When multipath is not present, the $CN0$ values on both channels may be such that the direct signal will differ by approximately 3 dB. For purposes of an embodiment of the invention, the threshold $T_{\Delta CN0i}$ is set to a value of 4 dB to allow some margin to prevent false detection. FIG. 2 and Table 1 below illustrate the conditions under which a determination of the presence of multipath occurs.

Table 1

| Condition | $\Delta PR_i \leq T_{(\Delta PRi)}$ | $\Delta PR_i > T_{(\Delta PRi)}$ |
|---|---|---|
| $\Delta CN0_i \geq T_{\Delta CN0i}$ | No Multipath | Possible Multipath |
| $\Delta CN0_i < T_{\Delta CN0i}$ | Possible Multipath | Multipath present |

In the case where multipath is clearly detected, an embodiment resets the RHCP channel tracking loops. Additionally, an embodiment resets such tracking loops if there is a determination of possible multipath.

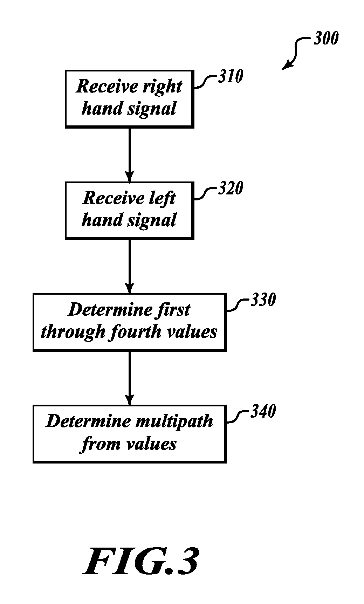

FIG. 3 illustrates a process 300, according to an embodiment of the invention. The process 300 is illustrated as a set of operations shown as discrete blocks. The process 300 may be implemented in any suitable hardware, software, firmware, or combination thereof. As such the process 300 may be implemented in computer-executable instructions that can be transferred from one electronic device to a second electronic device via a communications medium, such as the Internet. The order in which the operations are described is not to be necessarily construed as a limitation.

At a block 310, a right hand circular polarized signal is received, with a first antenna, from a satellite. For example, a first antenna 105 is configured to receive Right Hand Circular Polarized (RHCP) signals from a satellite transmitter 115.

At a block 320, a left hand circular polarized signal is received, with a second antenna, from the satellite. For example, a second antenna 110 is configured to receive Left Hand Circular Polarized (LHCP) signals from the satellite transmitter 115.

At a block 330, respective first and second values of a first parameter and respective third and fourth values of a second parameter are determined from the right hand circular polarized signal and left hand circular polarized signal. For example, respective signal power levels and pseudorange measurements associated with the polarized signals are provided to multipath detection logic 140 associated with the processor 130.

At a block 340, the presence of a multipath error associated with at least one of the polarized signals is determined based on the values. For example, when power levels from the LHCP channel approach the levels observed on the RHCP side, there is a high probability that multipath is present. Additionally, pseudorange measurements that are different further indicate multipath. Comparison of the pseudorange measurements and the power level from both antennas, each configured to respectively receive the direct (RHCP) and the indirect (LHCP), enables multipath detection. In the case where multipath is clearly detected, an embodiment resets the RHCP channel tracking loops. Additionally, an embodiment resets such tracking loops if there is a determination of possible multipath.

While the preferred embodiment of the invention has been illustrated and described, as noted above, many changes can be made without departing from the spirit and scope of the invention. For example, while the solution processing 135 and detection logic 140 are illustrated and described as being included and/or executed by a single processor 130, the solution processing 135 and detection logic 140 may be included and/or executed by multiple processing units. Accordingly, the scope of the invention is not limited by the disclosure of the preferred embodiment. Instead, the invention should be determined entirely by reference to the claims that follow.

The embodiments of the invention in which an exclusive property or privilege is claimed are defined as follows:

**Claims**

1. A multipath error detection system (100), comprising:

   a first antenna (105) configured to receive a right hand circular polarized signal from a satellite (115);
   a second antenna (110) configured to receive a left hand circular polarized signal from the satellite (115); and
   at least one processor (130) in signal communication with the first and second antennas (105, 110), and programmed to determine, from the right hand circular polarized signal and left hand circular polarized signal, respective first and second values of a first parameter and respective third and fourth values of a second parameter, and determine, based on the values, the presence of a multipath error associated with at least one of the polarized signals.

2. The system (100) of claim 1 wherein the processor (130) is further programmed to:

   determine a GPS position solution; and
   in response to determining the error presence, exclude the polarized signals from the solution determination.

3. The system (100) of claim 1 wherein determining the error presence comprises comparing the first value with the second value and comparing the third value with the fourth value.

4. The system (100) of claim 1 wherein the first parameter comprises pseudorange measurement, and the second parameter comprises carrier-to-noise ratio.

5. The system (100) of claim 4 wherein determining the error presence comprises determining that the difference in the first and second values exceeds 15 centimeters.

6. The system (100) of claim 4 wherein determining the error presence comprises determining that the difference in the third and fourth values is less than 4 decibels.

**7.** A multipath error detection system (100), comprising:

first and second antennas (105, 110) configured to respectively receive first and second signals from a satellite (115); and

at least one processor (130) in signal communication with the first and second antennas (105, 110), and programmed to determine, from the first and second signals, respective first and second values of pseudorange measurement and respective third and fourth values of carrier-to-noise ratio, and determine, based on the values, the presence of a multipath error associated with at least one of the first and second signals.

**8.** The system (100) of claim 7 wherein the processor (130) is further programmed to:

determine a GPS position solution; and

in response to determining the error presence, exclude the first and second signals from the solution determination.

**9.** The system (100) of claim 7 wherein determining the error presence comprises comparing the first value with the second value and comparing the third value with the fourth value.

**10.** The system (100) of claim 7 wherein the first signal comprises a right hand circular polarized signal, and the second signal comprises a left hand circular polarized signal.

*FIG.1*

EP 2 086 055 A1

FIG.2

EP 2 086 055 A1

**FIG.3**

Europäisches
Patentamt

European
Patent Office

Office européen
des brevets

## EUROPEAN SEARCH REPORT

Application Number

EP 09 15 1469

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DINESH MANANDHAR ET AL: "GPS Signal Analysis using LHCP / RHCP Antenna and Software GPS Receiver" ION GNSS 17TH INTERNATIONAL TECHNICAL MEETING OF THE SATELLITE DIVISION, 21-24 SEPT. 2004, LONG BEACH, CA,, 21 September 2004 (2004-09-21), pages 2489-2498, XP007908680 * page 2489, column 2491, line 2493 * ----- | 1-10 | INV. H01Q21/24 G01S1/00 |
| X | US 5 995 044 A (KUNYSZ WALDEMAR [CA] ET AL) 30 November 1999 (1999-11-30) * figure 1 * * column 2, lines 8-45 * * column 3, lines 19-33 * * column 4, lines 9-24 * * claim 1 * ----- | 1-10 | |
| X | US 6 154 173 A (LENNEN GARY R [US] ET AL) 28 November 2000 (2000-11-28) * column 4, lines 4-30; figures 2,4,7 * * column 5, line 41 - column 6, line 55 * * column 7, line 50 - column 8, line 26 * * column 9, line 55 - column 10, line 47 * * column 11, lines 27-33 * ----- | 1-3 | TECHNICAL FIELDS SEARCHED (IPC)<br><br>G01S<br>H01Q |

The present search report has been drawn up for all claims

| Place of search | Date of completion of the search | Examiner |
|---|---|---|
| Munich | 5 June 2009 | Kern, Olivier |

**ANNEX TO THE EUROPEAN SEARCH REPORT
ON EUROPEAN PATENT APPLICATION NO.**

EP 09 15 1469

This annex lists the patent family members relating to the patent documents cited in  the above-mentioned European search report.
The members are as contained in the European Patent Office EDP file on
The European Patent Office is in no way liable for these particulars which are merely given for the purpose of information.

05-06-2009

| Patent document cited in search report | | Publication date | Patent family member(s) | | Publication date |
|---|---|---|---|---|---|
| US 5995044 | A | 30-11-1999 | AU | 748820 B2 | 13-06-2002 |
| | | | AU | 3591999 A | 23-11-1999 |
| | | | CA | 2319432 A1 | 11-11-1999 |
| | | | WO | 9957572 A1 | 11-11-1999 |
| | | | CN | 1299468 A | 13-06-2001 |
| | | | EP | 1075664 A1 | 14-02-2001 |
| | | | JP | 2002513938 T | 14-05-2002 |
| US 6154173 | A | 28-11-2000 | US | 6252546 B1 | 26-06-2001 |

EPO FORM P0459

For more details about this annex : see Official Journal of the European Patent Office, No. 12/82